(19) Europäisches Patentamt
European Patent Office
Office européen des brevets

(11) **EP 3 752 818 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **18833852.9**

(22) Anmeldetag: **18.12.2018**

(51) Internationale Patentklassifikation (IPC):
**G01N 21/64** *(2006.01)*

(52) Gemeinsame Patentklassifikation (CPC):
**G01N 21/6408; G01N 21/6458**

(86) Internationale Anmeldenummer:
**PCT/EP2018/085379**

(87) Internationale Veröffentlichungsnummer:
**WO 2019/158260 (22.08.2019 Gazette 2019/34)**

(54) **FLUORESZENZLEBENSDAUER-MIKROSKOPIE-VERFAHREN MIT ZEITKORRELIERTER EINZELPHOTONENZÄHLUNG**

FLUORESCENCE-LIFETIME IMAGING MICROSCOPY METHOD HAVING TIME-CORRELATED SINGLE-PHOTON COUNTING

PROCÉDÉ DE MICROSCOPIE À DURÉE DE VIE DE FLUORESCENCE AVEC COMPTAGE DE PHOTONS INDIVIDUELS CORRÉLÉ DANS LE TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2018 DE 102018103576**

(43) Veröffentlichungstag der Anmeldung:
**23.12.2020 Patentblatt 2020/52**

(73) Patentinhaber: **Leica Microsystems CMS GmbH 35578 Wetzlar (DE)**

(72) Erfinder:
- **HECHT, Frank 68161 Mannheim (DE)**
- **WIDZGOWSKI, Bernd 69221 Dossenheim (DE)**

(74) Vertreter: **Schaumburg und Partner Patentanwälte mbB Postfach 86 07 48 81634 München (DE)**

(56) Entgegenhaltungen:
WO-A1-2017/202980

- MATTHIAS PATTING ET AL: "Dead-time effects in TCSPC data analysis", PROCEEDINGS OF SPIE, Bd. 6583, 4. Mai 2007 (2007-05-04), Seiten 658307-1, XP055413435, US DOI: 10.1117/12.722804 ISBN: 978-1-5106-1533-5 in der Anmeldung erwähnt
- Ching-Wei Chang ET AL: "Fluorescence Lifetime Imaging Microscopy" In: "Recent Advances in Cytometry, Part A - Instrumentation, Methods", 1. Januar 2007 (2007-01-01), Elsevier, XP055217096, ISSN: 0091-679X ISBN: 978-0-12-374912-3 Bd. 81, Seiten 495-524, DOI: 10.1016/S0091-679X(06)81024-1, das ganze Dokument

EP 3 752 818 B1

**Beschreibung**

Die Erfindung betrifft ein Fluoreszenzlebensdauer-Mikroskopie-Verfahren zur numerischen Korrektur der Daten bei zeitkorrelierter Einzelphotonenzählung nach dem Oberbegriff des Anspruchs 1 sowie ein Mikroskop zur Durchführung eines solchen Verfahrens nach dem Oberbegriff des Anspruchs 13.

Die Fluoreszenzlebensdauer-Mikroskopie, kurz FLIM ("fluorescence lifetime imaging microscopy") ist ein bildgebendes fluoreszenzmikroskopisches Verfahren, das auf der Messung der unterschiedlichen Lebensdauern von angeregten Zuständen fluoreszierender Moleküle beruht. Anhand der gemessenen Lebensdauern kann beispielsweise auf die Eigenschaften der Umgebung des fluoreszierenden Moleküls wie pH-Wert, Temperatur, Ionenkonzentration, FRET-Übergänge etc. geschlossen werden, wobei FRET für "Förster-Resonanzenergietransfer" steht.

Die Bestimmung der Fluoreszenzlebensdauer kann direkt im Zeitbereich ("time domain lifetime measurement") oder in einem alternativen Verfahren im Frequenzbereich ("frequency domain lifetime measurement") erfolgen. Eine Bestimmung im Zeitbereich ist nach dem Verfahren der sog. zeitkorrelierten Einzelphotonenzählung, kurz TCSPC ("time correlated single photon counting") möglich. Bei diesem Verfahren werden die durch periodische Anregung mit Anregungslichtimpulsen freigesetzten Photonen einzeln erfasst. Gemessen wird typischerweise die Zeit zwischen einem Anregungslichtimpuls und dem darauf folgenden, von dem Detektor erfassten Fluoreszenzsignal. Die so erfassten Fluoreszenzphotonen werden dann über eine Vielzahl von Messungen in einem Histogramm zusammengetragen. In einem solchen Histogramm ist die Photonenzahl gegen die gemessene Zeit aufgetragen. In Abhängigkeit der in der Probe vorhandenen fluoreszierenden Moleküle wird eine zeitabhängige Abnahme der Fluoreszenzintensität mit einer oder mehreren exponentiellen Komponenten beobachtet.

Die Zeitmessung erfolgt bei diesem Verfahren üblicherweise mit einer Auflösung unterhalb einer Nanosekunde. Bei der Zeitmessung in diesem Zeitbereich sind Fehlereinflüsse durch Gerätekomponenten wie Lichtquelle, Optik, Detektor und Elektronik von Bedeutung. Die Gesamtheit der Fehler, die durch das Gerät entstehen, wird als Geräteübertragungsfunktion bezeichnet, kurz IRF ("instrument response function").

Die Geräteübertragungsfunktion kann unter optimalen Aufnahmebedingungen gemessen werden. Auch eine Bestimmung der Geräteübertragungsfunktion aus den Daten der Aufnahme der zu untersuchenden Probe selbst ist üblich.

Die Analyse der aufgenommenen Daten erfolgt üblicherweise mit einem nichtlinearen Optimierungsverfahren unter Verwendung einer Modellfunktion der Form

$$f(t) = \int_0^t IRF(x) \cdot \left\{ \sum_{n=1}^{N} A_n . e^{-\frac{x}{\tau_n}} + B \right\} dx$$

mit der Anzahl N der fluoreszierenden Komponenten, den Amplituden $A_n$ der einzelnen Komponenten, den Lebenszeiten $\tau_n$ der einzelnen Komponenten, einem Hintergrund B und der Geräteübertragungsfunktion $IRF(t)$. Mit dem Optimierungsverfahren können die Lebenszeiten $\tau_n$ und die zugehörigen Amplituden $A_n$ bestimmt werden. Die Genauigkeit der bestimmten Lebenszeiten $\tau_n$ hängt stark von Anzahl der aufgenommen Photonen ab. Beispielsweise werden derzeit für die Bestimmung der Lebenszeit $\tau_n$ einer Komponente mit einer Messgenauigkeit von 10% mehrere 100 Photonen benötigt. Für zwei Komponenten benötigt man ca. 10000 Photonen.

Um Proben mit mehreren Komponenten in angemessener Zeit untersuchen zu können, werden die Histogramme aller Bildpixel oder einer Region von Bildpixeln üblicherweise zu einem Histogramm zusammengefasst, das hier als Gesamthistogramm ("overall decay") bezeichnet wird. Die Anwendung des Optimierungsverfahrens auf ein Gesamthistogramm liefert die Lebenszeiten $\tau_n$ und die Amplituden $A_n$ mit ausreichender Genauigkeit. Die Ergebnisse werden üblicherweise dann in einem zweiten Schritt unter Anwendung des Optimierungsverfahrens auf die einzelnen Bildpixel verwendet, wobei nur ausgewählte Parameter der Modellfunktion, z.B. nur die Amplituden $A_n$ oder nur die Lebenszeit $\tau_n$ einer Komponente mit ausreichender Genauigkeit bestimmt werden müssen.

Ein Problem des vorstehend Beschriebenen, auf einer Einzelphotonenzählung beruhenden Verfahrens liegt darin, dass die Kombination aus Detektor und Elektronik unmittelbar nach Erfassung eines einzelnen Photons über eine gewisse Zeitspanne nicht wieder bereit ist, ein weiteres Photon nachzuweisen. Diese Zeitspanne wird auch als Totzeit des Systems bezeichnet. Die Einflüsse der Totzeit des Systems können nicht in der Geräteübertragungsfunktion $IRF(t)$ berücksichtigt werden, da sie von der Probe selbst abhängen. Während die typische Totzeit herkömmlicher Systeme im Bereich von etwa 50 bis 100 ns liegt, wurden durch den technischen Fortschritt bei Elektronik und Detektoren mittlerweile auch Systeme mit einer Totzeit im Bereich von wenigen Nanosekunden entwickelt.

Bei Systemen mit einer Totzeit größer als der Periode der Anregungslichtimpulse kann üblicherweise nur das erste Fluoreszenzphoton nach dem Anregungslichtimpuls detektiert werden. Es kommt zu einer höheren Gewichtung der geringeren Zeitanteile im Histogramm. Diese das Messergebnis verfälschende höhere Gewichtung wird in Fachkreisen auch als Pile-up-Effekt bezeichnet. Um diesen Pile-up-Effekt zu vermeiden, muss die Intensität der einfallenden Anregungslichtimpulse so niedrig eingestellt werden, dass die entsprechend lange Aufnahmezeit zu einer erheblichen Einschränkung der Anwendbarkeit dieser Methode führt.

Auch bei Systemen mit einer Totzeit im Bereich von wenigen Nanosekunden kommt es zu einer Verfälschung der aufgenommenen Daten. Unmittelbar nach dem Anregungslichtimpuls sendet ein Molekül wesentlich mehr Photonen als zu späteren Zeitpunkten. Ein erheblicher Anteil dieser Photonen trifft immer noch innerhalb der Totzeit auf den Detektor. Derartige Systeme erlauben zwar eine Erhöhung der Intensität der einfallenden Anregungslichtimpulse bei vergleichbaren Messfehlern von herkömmlichen Geräten, aber nicht in ausreichendem Maß, um die Aufnahmezeiten anderer Mikroskopie-Verfahren zu erreichen.

Totzeiteffekte lassen sich durch weitgehende Parallelisierung bzgl. Detektor und Elektronik erheblich reduzieren. Eine solche Parallelisierung ist jedoch technisch aufwendig und deshalb mit erheblichen Kosten verbunden. Eine Korrektur der Totzeiteffekte ist damit von essentieller Bedeutung beim Einsatz der Fluoreszenzlebensdauer-Mikroskopie für eine Vielzahl von Anwendungen.

Aus der Literatur sind zahlreiche Verfahren zur Korrektur der Totzeiteffekte bei der zeitkorrelierten Einzelphotonenzählung bekannt. Alle haben Einschränkungen hinsichtlich ihrer Einsetzbarkeit auf ein Gesamthistogramm oder Einschränkungen bei der Wahl der einsetzbaren Detektortypen oder Elektronik. Diese Verfahren lassen sich in drei Gruppen einteilen. Verfahren, die Signale vom Detektor filtern, Verfahren, die Histogramm-Daten modifizieren, und Verfahren, die Änderungen beim Optimierungsverfahren selbst vornehmen.

Neben dem Aspekt der korrekten Datenanalyse ist auch die Datenrepräsentation gegenüber dem Anwender von Bedeutung. Aus der grafischen Darstellung können Anwender Rückschlüsse auf die Ergebnisse der Aufnahme und weitere notwendige Aktivitäten ziehen. Eine Repräsentation des Gesamthistogramms in korrigierter Form ist deshalb wünschenswert.

In WO 2017/201980 wird ein Verfahren beschrieben, bei dem nur Perioden von Anregungslichtimpulsen berücksichtigt werden, in denen zwischen aufeinander folgenden Anregungslichtimpulsen eine vorgegebene Anzahl von Photonen erfasst wurde. Dieses Verfahren kann zur Erzeugung eines korrigierten Gesamthistogramms eingesetzt werden, wenn Detektor und Elektronik einige Voraussetzungen erfüllen. Die Signalbreite darf für unterschiedliche Photonen nicht stark unterschiedlich sein, eine Erkennung von mehreren kurz aufeinanderfolgenden Photonensignalen muss möglich sein und die Elektronik muss über ein Auswerteverfahren bzgl. der Pulsbreite verfügen, das eine solche Filterung ermöglicht. Dieses Verfahren ist damit nicht universell einsetzbar.

In P. B. Coates, "Pile-up corrections in the measurement of lifetimes", J. Phys. E: Sci. Instrum. 5, 148-150 (1972) wird ein Verfahren beschrieben, bei dem jede Spalte im Histogramm, die der jeweiligen Detektionszeit zugeordnet ist, unabhängig von den anderen Spalten modifiziert wird. Die Modifikation beruht auf den Eigenschaften der Statistik der Detektion von Photonen. Das Verfahren lässt sich auf ein Gesamthistogramm nicht anwenden, da ein Gesamthistogramm aus den Daten an unterschiedlichen Probenorten mit dementsprechend unterschiedlicher Intensität zusammengesetzt wird. Eine Korrektur vor dem Zusammensetzen scheitert an zu geringer Anzahl von Photonen in den Einzelhistogrammen.

In J. G. Walker, "Iterative correction for 'pile-up' in single-photon lifetime measurement", Opt. Comm., 201, 271-277 (2002) wird ein verfeinertes Verfahren beschrieben, das zusätzlich Intensitätsschwankungen der Lichtquelle mit einem iterativen Ansatz berücksichtigt. Bei der heute üblichen Verwendung gepulster Laserlichtquellen sind Intensitätsschwankungen keine relevante Fehlerquelle mehr. Die Idee könnte aber auch auf die Berücksichtigung unterschiedlicher Intensitäten in den unterschiedlichen Bildpixeln aufgegriffen werden, die im Gesamthistogramm zusammengefasst sind. In der Praxis konvergiert dieses iterative Verfahren dabei aber häufig nicht, da sich die Intensitäten zu stark unterscheiden können.

In M. Patting et.al, Dead-time effects in TCSPC data analysis, Proc. of SPIE Vol. 6583, 658307, (2007) wird ein Verfahren beschrieben, bei dem die Modellfunktion des Optimierungsverfahrens angepasst wird, um Totzeiteffekte zu berücksichtigen. Das Verfahren lässt sich bei Verzicht auf die dort beschriebene Vereinfachung auch auf Daten anwenden, die von Systemen mit sehr geringer Totzeit erzeugt wurden. In der modifizierten Modellfunktion $f_m(t)$

$$f_m(t) = f(t) \cdot \prod_{y=t-t_d}^{t} \left\{ 1 - \frac{1}{P} \cdot f(y) \right\}$$

wird die oben angegebene Modellfunktion $f(t)$ mit einem Korrekturterm multipliziert, der der Wahrscheinlichkeit entspricht, dass innerhalb der Totzeit kein Photon detektiert wurde. P ist die Anzahl der Anregungslichtimpulse und $t_d$ ist die Totzeit des Systems. Das Verfahren ist geeignet, die gesuchten Parameter mit einem Optimierungsverfahren in den einzelnen Bildpixel zu bestimmen. Eine Anwendung auf ein Gesamthistogramm ist nicht möglich.

In M. Patting et.al, Fluorescence decay data analysis correcting for detector pulse pileup at very high count rates, Optical Engineering, 57(3), 031305 (2018) wird ebenfalls ein Verfahren beschrieben, bei dem die Modellfunktion des Optimierungsverfahrens angepasst wird. Der dort vorgeschlagene Korrekturterm setzt voraus, dass der aus der Poisson-Statistik resultierende Korrekturfaktor in nur einer Histogrammspalte den Totzeiteinfluss für diese Histogrammspalte charakterisiert. Das ist aber besonders dann nicht Fall, wenn der Anfang des Histogramms, der den Detektionszeiten zu Beginn des Messintervalls zugeordnet ist, von einer Komponente mit sehr kurzer Lebenszeit dominiert wird. Durch damit verbundene Fehler muss ein Anwender prüfen, ob sich das Verfahren für den jeweiligen Anwendungsfall eignet.

In WO 2010/089363 A1 ist ein Verfahren beschrieben, bei dem Änderungen beim Optimierungsverfahren selbst vorgenommen werden, die dazu dienen, den Totzeiteffekt zu berücksichtigen. Das Verfahren lässt sich in der dort beschriebenen Form nicht auf ein Gesamthistogramm anwenden. Die Präsentation eines korrigierten Gesamthistogramms ist nicht möglich.

In J. D. Driscoll et.al, Photon counting, censor corrections, and lifetime imaging for improved detection in two-photon microscopy, J Neurophysiol 105: 3106-3113, (2011) wird eine Totzeitkorrektur bei einem System mit 3.1 ns Totzeit beschrieben. Es werden zwei Verfahren mit Korrektur sowohl des Histogramms als auch der Berechnung des Gütekriteriums des Optimierungsverfahrens vorgeschlagen.

Bei dem ersten der beiden vorgenannten Verfahren wird für jede Spalte im Histogramm zusätzlich bestimmt, bei wie vielen Anregungslichtimpulsen kein Photon detektiert wurde. Beim zweiten Verfahren wird zusätzlich bestimmt, bei wie vielen Anregungslichtimpulsen genau ein Photon detektiert wurde. Mit den zusätzlichen Informationen wird anhand der Poisson-Statistik ein Korrekturwert ermittelt. Beide Verfahren unterliegen den gleichen Einschränkungen wie das Verfahren von Coates. Beim zweiten Verfahren wird zusätzlich gefordert, dass nur eine Komponente in der Probe mit bekannter Lebenszeit den Anfang des Abklingverhaltens im Histogramm dominiert.

Ein Verfahren zur Fluoreszenzlebensdauer-Mikroskopie ist bekannt aus der Veröffentlichung von Ching-Wie Chang et al.: "Fluorescence Lifetime Imaging Microscopy" in: "Recent Advances in Cytometry, Part A - Instrumentation, Methods", 1. Januar 2007 (2007-01-01), Elsevier, XP055217096, ISSN: 0091-679X, ISBN: 978-0-12-374912-3; Bd. 81, Seiten 495-524, DOI: 10.1016/S0091-679X(06)81024-1. Bei diesem Verfahren werden Fluoreszenzlebensdauern unter Anwendung einer Mittelwertbildung berechnet, die mit gewichteten Intensitätskoeffizienten arbeitet.

Das Dokument WO 2017/202980 A1 beschreibt ein Fluoreszenzlebensdauer-Mikroskopieverfahren mit zeitkorrelierter Einzelphotonenzählung. Bei diesem Verfahren werden die Fluoreszenzphotonen mittels eines Detektors erfasst, und es wird ein die erfassten Fluoreszenzphotonen repräsentierendes analoges Detektorsignal erzeugt. Dieses analoge Detektorsignal wird innerhalb eines jeweiligen Messintervalls in mehreren Abtastintervallen abgetastet und in eine Folge von diskreten, den einzelnen Abtastintervallen zugeordneten Signalwerten umgesetzt. Anhand der zu dem jeweiligen Messintervall gehörenden Folge diskreter Signalwerte wird bestimmt, ob innerhalb des Messintervalls mehr als eine vorbestimmte Zahl an Fluoreszenzphotonen erfasst worden ist. Dieses Messintervall wird für die Bestimmung einer das Fluoreszenzabklingverhalten charakterisierenden Größe verworfen, wenn mehr als diese vorbestimmte Zahl an Fluoreszenzphotonen erfasst worden ist.

Aufgabe der Erfindung ist es, ein Fluoreszenzlebensdauer-Mikroskopieverfahren sowie ein zur Durchführung eines solchen Verfahrens ausgebildetes Mikroskop anzugeben, die es ermöglichen, mit vergleichsweise geringem technischen Aufwand die Anregungslichtintensität unter Vermeidung eines Pile-up-Effektes zu erhöhen und die für universellen Einsatz von Detektor- und Elektroniktypen geeignet sind. Es ist eine zusätzliche Aufgabe der Erfindung ein solches Verfahren anzugeben, das eine Repräsentation des Gesamthistogramms in korrigierter Form ermöglicht.

Die Erfindung löst diese Aufgabe durch die Gegenstände der unabhängigen Ansprüche. Vorteilhafte Weiterbildungen der Erfindung ergeben sich aus den abhängigen Ansprüchen und der folgenden Beschreibung.

Die Erfindung sieht ein Fluoreszenzlebensdauer-Mikroskopieverfahren mit zeitkorrelierter Einzelphotonenzählung vor, bei dem eine Probe mittels einer gepulsten Lichtquelle periodisch mit Anregungslichtimpulsen zur Emission von Fluoreszenzphotonen angeregt wird, wobei zwischen jeweils zwei aufeinanderfolgenden Anregungslichtimpulsen ein Messintervall definiert wird, mittels eines Detektors die Fluoreszenzphotonen erfasst werden und ein die erfassten Fluoreszenzphotonen repräsentierendes Detektorsignal erzeugt wird, auf Grundlage des Detektorsignals Detektionszeiten bestimmt werden, zu denen die Fluoreszenzphotonen innerhalb der jeweiligen Messintervalle von dem Detektor detektiert werden und auf Grundlage der Detektionszeiten der erfassten Fluoreszenzphotonen eine Bildgebung vorgenommen wird.

Erfindungsgemäß wird im jeweiligen Messintervall bestimmt, ob eine vorbestimmte Anzahl von Fluoreszenzphotonen innerhalb des Messintervalls erfasst worden.

Für eine Mehrzahl von Bildpixeln werden die Detektionszeiten aller erfassten Photonen in einem ersten Datenspeicher (bzw. Datenbereich) zusammengefasst.

Für dieselbe Mehrzahl von Bildpixeln werden die Detektionszeiten nur derjenigen Photonen aus Messintervallen mit der vorbestimmten Anzahl erfasster Photonen in einem zweiten Datenspeicher zusammengefasst.

Die Informationen in den beiden Datenspeichern werden in einem Rechenschritt kombiniert und wiederum in einem Datenspeicher abgelegt.

Die Daten im zuletzt genannten Datenspeicher können auf einem Ausgabegerät angezeigt oder zur Bestimmung von Lebenszeiten der Komponenten der Moleküle innerhalb der Mehrzahl von Bildpixeln herangezogen werden.

Das Messintervall, das zwischen jeweils zwei aufeinanderfolgenden Anregungslichtimpulsen definiert ist, ist nicht notwendigerweise gleich dem zeitlichen Abstand zwischen diesen beiden Impulsen. So ist es auch denkbar, das Messintervall eine kurze Zeit vor- oder nach dem ersten der beiden genannten Anregungslichtimpulse beginnen und enden zu lassen. Typische Werte der Zeit vor und/oder nach dem ersten der beiden genannten Anregungslichtimpulse sind beispielsweise 1% bis 10% der durchschnittlichen Pulsdauer des Anregungslichts oder der Zeitspanne zwischen zwei jeweils aufeinanderfolgenden Anregungslichtimpulsen.

Die Bestimmung der Anzahl der detektierten Photonen in einem Messintervall kann beispielsweise mit einem Zähler erfolgen, der bei Erkennen eines Anregungslichtimpulses zurückgesetzt (z.B. auf Null gesetzt) wird und bei jedem detektierten Photon inkrementiert. Die ermittelten Detektionszeiten können um eine Information ergänzt werden, die angibt, um das wievielte Photon innerhalb des Messintervalls es sich bei dem jeweiligen Photon handelt. Alternativ kann bei Erkennen eines Anregungslichtimpulses ein zusätzliches Datenwort in den Dateninformationsstrom eingefügt werden. Die entsprechenden Operationen zur Erzeugung der Information, ob im Messintervall die vorbestimmte Anzahl von Photonen erfasst worden, kann in einer Logikschaltung, frei programmierbarer Logik oder Software erfolgen.

Die vorbestimmte Anzahl erfasster Photonen ist gleich eins.

Die Detektionselektronik des Systems erzeugt einen Datenstrom, wobei für jedes erkannte Photon ein Datenwort mit der Detektionszeit in den Datenstrom eingefügt wird. Im Datenwort ist ein Markierungsbit vorgesehen. Dieses Bit erhält z.B. Wert 1, wenn es sich um das erste detektierte Photon nach dem Anregungslichtimpuls handelt, sonst den Wert 0. Der Datenstrom wird in einer Logikschaltung, frei programmierbarer Logik oder Software verarbeitet. Genau dann, wenn zwei aufeinanderfolgende Datenworte markiert sind, wurde im Messintervall, aus dem das erste Datenwort stammt, genau ein (1) Photon detektiert.

Erfindungsgemäß werden die Detektionszeiten aller erfassten Photonen für eine Mehrzahl von Bildpixeln in einem ersten Datenspeicher und die Detektionszeiten der Photonen, aus Messintervallen mit der vorbestimmten Anzahl erfasster Photonen für dieselbe Mehrzahl von Bildpixeln in einem zweiten Datenspeicher zusammengefasst und die Informationen in den beiden Datenspeichern mit einem Rechenschritt kombiniert. Diese Mehrzahl von Bildpixeln können dabei alle Pixel eines Bildes, aber auch die Pixel in einer Bildregion sein. Übliche Bildformate weisen zweidimensional, in der Regel rechteckig angeordnete Pixel auf, wobei z.B. 1024 x 1024, 512 x 512 Pixel jeweils in x- bzw. y-Richtung vorgesehen sind. Einzelne Bildregionen (sogenannte ROI's, Region of Interest) können einen rechteckigen, quadratischen oder runden Bereich oder eine zweidimensionale, durch einen Benutzer frei definierbare Form aufweisen.

Die Zusammenfassung der Detektionszeiten erfolgt in einer bevorzugten Ausführung, indem die Häufigkeit detektierter Photonen für einen Detektionszeitbereich in Form eines Histogramms ermittelt wird. Das Histogramm im ersten Datenspeicher ist dabei das nicht korrigierte Gesamthistogramm. Das Histogramm im zweiten Datenspeicher stellt dann eine Untermenge des nicht korrigierten Gesamthistogramms im ersten Datenspeicher dar. Die Zusammenfassung der Detektionszeiten kann aber auch in anderer Form erfolgen, z.B. durch Bestimmung von Momenten für die Häufigkeit detektierter Photonen in Abhängigkeit von der Detektionszeit.

Erfindungsgemäß werden die Informationen in den beiden Datenspeichern mit einem Rechenschritt kombiniert. In einer bevorzugten Ausführungsform wird das nicht korrigierte Gesamthistogramm bestimmt, im Folgenden als $M_a(t)$ bezeichnet. Zusätzlich wird die vorgenannte Untermenge als Histogramm $M_1(t)$ mit der Anzahl der Photonen aus Messintervallen, in denen nur ein Photon detektiert wurde, bestimmt. Die Histogramm-Spalten entsprechen der jeweiligen Detektionszeit nach dem Anregungslichtimpuls. Zu ermitteln ist das Histogramm $f(t)$, das bei einer Aufnahme mit einem idealen Gerät ohne Totzeit aufgenommen würde.

Nur dann, wenn innerhalb der Totzeit vor dem Zeitpunkt t kein Photon detektiert wurde, kann zum Zeitpunkt $t$ ein Photon detektiert werden. Für eine Spalte mit der Detektionszeit t im Gesamthistogramm $M_\alpha(t)$ gilt deshalb:

$$M_a(t) = P_0(t - t_d, t) \cdot f(t) \qquad (1)$$

mit der Totzeit $t_d$ des Systems. $P_0(a,b)$ ist die Wahrscheinlichkeit, dass im Zeitraum $a$ bis $b$ kein Photon detektiert wurde. Ein ähnlicher Zusammenhang gilt für $M_1$ zum Zeitpunkt $t\text{-}t_d$:

$$M_1(t - t_d) = P_0(t_0, t - t_d) \cdot P_0(t, t_m) \cdot f(t - t_d). \qquad (2)$$

Nur wenn vorher oder nach der Totzeit kein Photon detektiert wurde, kann zum Zeitpunkt $t\text{-}t_d$ genau ein Photon detektiert werden.

Die Multiplikation der Gleichungen (1) und (2) ergibt:

$$M_a(t) \cdot M_1(t - t_d) = P_0\big(t_0, t - t_d\big) \cdot P_0\big(t - t_d, t\big) \cdot P_0\big(t, t_m\big) \cdot f(t) \cdot f(t - t_d). \qquad (3)$$

Die Gleichung (3) lässt sich mit

$$P_0 = P_0\big(t_0, t - t_d\big) \cdot P_0\big(t - t_d, t\big) \cdot P_0\big(t, t_m\big) \qquad (4)$$

zu

$$M_a(t) \cdot M_1(t - t_d) = P_0 \cdot f(t) \cdot f(t - t_d) \qquad (5)$$

vereinfachen. Dabei ist $P_0$ die Wahrscheinlichkeit, dass im gesamten Messintervall kein Photon detektiert wurde. $P_0$ lässt sich näherungsweise aus der Gesamtanzahl der detektierten Photonen $M_\alpha$ und der Gesamtanzahl der Messintervalle $L$ mit Hilfe der Poisson-Verteilungsfunktion bestimmen:

$$P_0 \sim e^{-M_a/L}. \qquad (6)$$

Eine präzise Bestimmung ist möglich, wenn zusätzlich bei der Aufnahme die Anzahl der Messintervalle $L_0$ bestimmt wird, in denen kein Photon detektiert wurde:

$$P_0 = \frac{L_0}{L}. \qquad (7)$$

Diese Bestimmung ist präzise, da Totzeiteffekte in den Messintervallen ohne detektiertes Photon im Gegensatz zu Messintervallen mit detektierten Photonen vernachlässigbar sind.

Die gesuchten *Werte f(t)* des korrigierten Histogramms werden nun mit einem nichtlinearen Optimierungsverfahren bestimmt. In einer besonders einfachen Ausführungsform wird das Verfahren der Quadratmittelapproximation ausgeführt, welches

$$\sum_{t=t_0+t_d}^{t_m} \left\{ \frac{M_a(t) \cdot M_1(t - t_d)}{P_0} - f(t) \cdot f(t - t_d) \right\}^2 \qquad (8)$$

minimiert. Eine Beschreibung eines nichtlinearen Optimierungsverfahrens mit Quadratmittelapproximation enthält D.W. Marquardt, *An algorithm for least-squares estimation of nonlinear parameters.* J. Soc. Indust. Appl. Math., (1963). **11**(2) 431-441. Es ist für den Fachmann leicht ersichtlich, dass sich hier auch weiterführende Optimierungsverfahren einsetzten lassen, die der statistischen Natur der Daten ebenfalls gerecht werden.

Die Kombination der Informationen aus den beiden Datenspeichern mit einem Rechenschritt muss aber nicht zwangsläufig unter Anwendung eines Optimierungsverfahrens durchgeführt werden. Sie kann z.B. auch mit einer iterativen Verfeinerung des Histogramms mit aufeinander folgenden Rechenschritten

$$f''(t - t_d) = \frac{M_a(t) \cdot M_1(t - t_d)}{P_0 \cdot f'(t)} \qquad (9)$$

und den Startwerten

$$f'(t) = M_1(t) \qquad (10)$$

erfolgen.

Das korrigierte Gesamthistogramm kann dem Anwender z.B. auf einem Computermonitor präsentiert werden.

Da das korrigierte Gesamthistogramm vergleichbare Eigenschaften wie ein Histogramm bei niedrigerer Anregungslichtintensität aufweist, ist eine Bestimmung von Fluoreszenzlebenszeiten möglich.

Die Erfindung wird im Folgenden anhand der Figuren näher erläutert. Darin zeigen:

Figur 1 ein konfokales Scanmikroskop, das ein Ausführungsbeispiel des erfindungsgemäßen Mikroskops darstellt,

Figur 2 zeigt zur Verdeutlichung der Problemstellung die nicht korrigierten Gesamthistogramme einer homogenen und einer inhomogenen Probe,

Figur 3 zeigt Gesamthistogramme mit den zugehörigen Totzeiteffekten für alle Photonen, diejenigen Photonen aus den Messintervallen, in denen nur ein Photon detektiert wurde, und ein korrigiertes Gesamthistogramm,

Figur 4 zeigt den Ablauf der einzelnen Verarbeitungsschritte bei einer bevorzugten Ausführung des Verfahrens, und

Figur 5 zeigt die Untereinheiten in der Verarbeitungseinheit des Mikroskops für eine bevorzugte Ausführung.

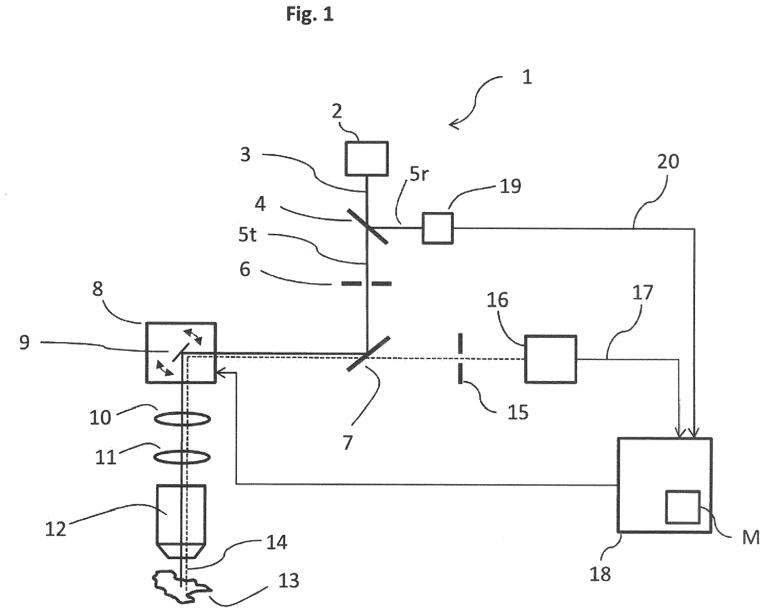

Ein in Figur 1 gezeigtes konfokales Scanmikroskop 1 weist eine gepulste Laserlichtquelle 2 auf, die ausgebildet ist, Licht mit periodischen Anregungslichtimpulsen zu emittieren. Das in Figur 1 mit 3 bezeichnete Anregungslicht fällt auf einen Strahlteiler 4, der das Anregungslicht 3 in einen transmittierten Anteil 5t und einen reflektierten Anteil 5r aufspaltet.

Das durch den Strahlteiler 4 transmittierte Anregungslicht 5t tritt durch eine Anregungslochblende 6 und wird dann an einem dichroitischen Strahlenteiler 7 in Richtung einer Scaneinheit 8 reflektiert. Die Scaneinheit 8 enthält einen kardanisch aufgehängten Scanspiegel 9, der das Anregungslicht 5t in Richtung einer Scanlinse 10 reflektiert. Nach Durchtritt durch die Scanlinse 10 und eine Tubuslinse 11 gelangt das Anregungslicht 5t in ein Mikroskopobjektiv 12, welches das Anregungslicht 5t auf eine Probe 13 leitet.

In dem von dem Anregungslicht 5t beleuchteten Bereich der Probe 13 werden fluoreszierende Moleküle zur Emission von Fluoreszenzlicht 14 angeregt. Die das Fluoreszenzlicht 14 bildenden Fluoreszenzphotonen propagieren längs des Lichtwegs, auf dem das Anregungslicht 5t ausgehend von dem dichroitischen Strahlenteiler 7 in die Probe 13 gelangt, in umgekehrter Richtung zurück zu dem Strahlenteiler 7. Nach Durchtritt durch den Strahlenteiler 7 und eine Detektionslochblende 15 gelangt das Fluoreszenzlicht 14 dann zu einem ersten Detektor 16. Der erste Detektor 16 setzt das empfangene Fluoreszenzlicht 14 in ein Detektorsignal 17 um, das einer Verarbeitungseinheit 18 zugeführt wird, die einen Monitor M aufweist.

Zusätzlich zu dem ersten Detektor 16, der das empfangene Fluoreszenzlicht 14 in das Detektorsignal umsetzt, verfügt das Scanmikroskop 1 über einen zweiten Detektor 19, der in dem durch den Strahlteiler 4 abgezweigten Strahlengang angeordnet ist. Somit empfängt der zweite Detektor 19 den durch den Strahlteiler 7 reflektierten Anteil 5r des von der Laserlichtquelle 2 emittierten Anregungslichtes 3. Der zweite Detektor 19 setzt das an dem Strahlenteiler 4 reflektierte Anregungslicht 5r in ein Anregungssignal 20 um und führt dieses der Verarbeitungseinheit 18 zu.

Zur Vermeidung des eingangs erläuterten Pile-up-Effektes ist die Verarbeitungseinheit 18 erfindungsgemäß ausgebildet, auf Grundlage des Detektorsignals zu bestimmen, ob innerhalb eines Messintervalls, das beispielsweise durch zwei aufeinanderfolgende Anregungslichtimpulse definiert ist, eine vorbestimmte Anzahl von Photonen erkannt wurde, die Detektionszeiten aller erfassten Photonen in Datenspeicher zusammenzufassen, die Detektionszeiten nur derjenigen Photonen, aus Messintervallen mit der vorbestimmten Anzahl erfasster Photonen, in einem zweiten gemeinsamen Datenspeicher zusammenzufassen, die Informationen in den beiden Datenspeichern mit einem Rechenschritt zu kombinieren und die Ergebnisse dieses Rechenschritts in einem Datenspeicher abzulegen.

Die Verarbeitungseinheit 18 ist ferner ausgebildet, die Scaneinheit 9 in an sich bekannter Weise anzusteuern. Außerdem verfügt die Verarbeitungseinheit 18 über ein Anzeigegerät M, z.B. einen Monitor.

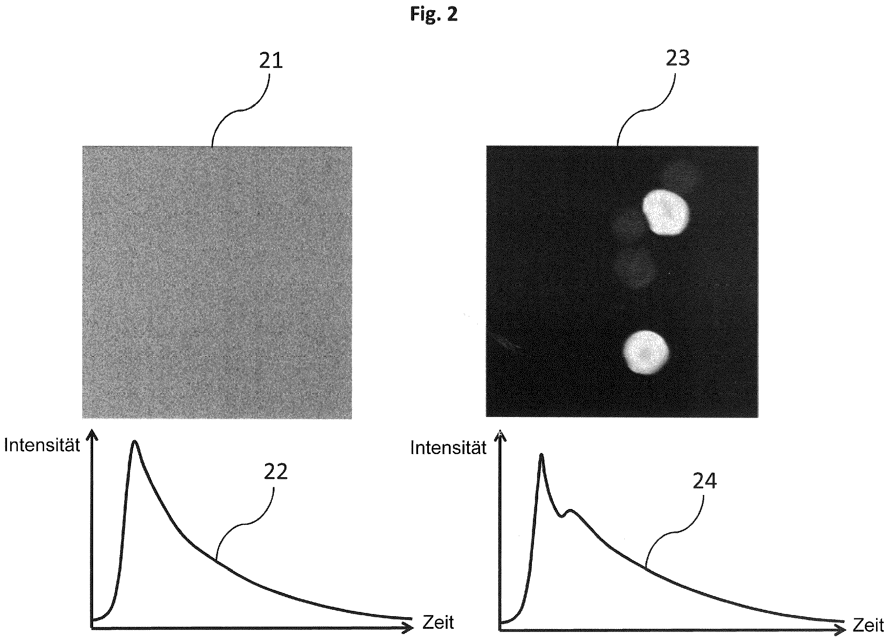

Die Figur 2 verdeutlicht das Problem, das mit dem Rechenschritt zur Kombination der Informationen in den beiden Speichern gelöst wird. Sie zeigt das nicht korrigierte Gesamthistogramm 22 aus einer Aufnahme einer homogenen Probe 21 und das nicht korrigierte Gesamthistogramm 24 aus einer Aufnahme einer inhomogenen Probe 23, wobei in beiden Fällen die gesamte Anregungslichtintensität, d.h. die gesamte Anzahl aufgenommener Photonen in etwa gleich ist, jedoch in dem Bild der inhomogenen Probe 23 lokal deutliche Intensitätsmaxima vorhanden sind. Aus der unterschiedlichen Form der Gesamthistogramme nach Figur 2 wird ersichtlich, dass die Information in einem Gesamthistogramm alleine nicht ausreicht, um eine robuste Korrektur vornehmen zu können. Viele Verfahren nach dem Stand der Technik können nicht auf ein Gesamthistogramm angewendet werden, weil die Totzeiteffekte von den Konzentrationen der unterschiedlichen Komponenten an unterschiedlichen Orten abhängen. In dem Beispiel nach Figur 2 ist insbesondere zu erkennen, dass bei der Aufnahme der homogenen Probe 21 kein Pile-up-Effekt auftritt, da in diesem Fall die Anregungslichtintensität in jedem einzelnen Bildpixel (konstant) relativ gering ist. Demgegenüber zeigt sich in der Aufnahme der inhomogenen Probe 23 ein Pile-up-Effekt, da dort Bildbereiche vorhanden sind, deren Pixel eine vergleichsweise hohe Anregungslichtintensität empfangen und der Anteil der Photonen, die innerhalb der Totzeit nach dem letzten detektierten Photon am Detektor auftreffen, mit der Anregungslichtintensität steigt.

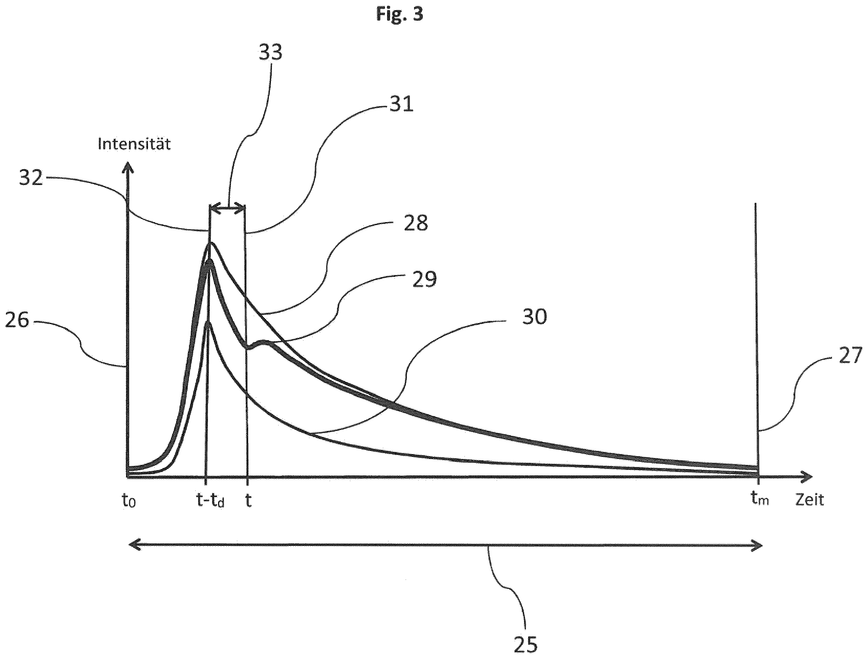

In Figur 3 sind ein Messintervall 25 mit Messintervallanfang 26 und Messintervallende 27, ein typisches ideales und erfindungsgemäß zu bestimmendes Gesamthistogramm $f(t)$ (Bezugszeichen 28) und ein nicht korrigiertes Gesamthistogramm $M_\alpha(t)$ (Bezugszeichen 29) bei sehr hoher Anregungslichtintensität dargestellt.

Ein weiteres Histogramm $M_1(t)$ (Bezugszeichen 30) enthält nur die Daten derjenigen Photonen aus den Messintervallen, in denen nur ein Photon detektiert wurde. Eine Intensitätsreduktion in $M_\alpha(t)$ (Bezugszeichen 29) durch Totzeiteffekte mit der Totzeit $t_d$ (Bezugszeichen 33) zu einem Zeitpunkt $t$ (Bezugszeichen 31) ist immer mit einer Intensitätserhöhung in $M_1(t)$ (Bezugszeichen 30) zum Zeitpunkt $t\text{-}t_d$ (Bezugszeichen 32) verbunden.

Das korrigierte Gesamthistogramm $f(t)$ kann aus den Größen $M_\alpha(t)$ und $M_1(t)$ beispielsweise unter Anwendung der weiter oben angegebenen Beziehungen (1) bis (8) bzw. der Beziehungen (9) und (10) ermittelt werden.

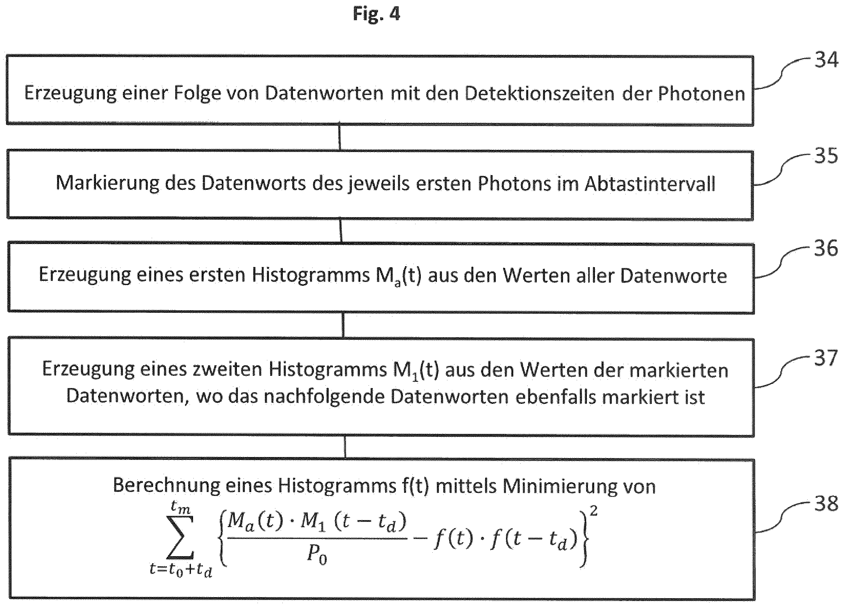

In Figur 4 ist eine Schrittfolge der Operationen dargestellt, die durch die Verarbeitungseinheit 18 durchgeführt werden können. Zunächst wird aus den Detektorsignalen 17 und 20 eine Detektionszeit für jedes erkannte Photon mittels einer Zeitmessung zwischen dem Signal des Photons 17 und dem Signal 20 des Anregungslichtimpulses die Detektionszeit bestimmt (in Figur 4 nicht als eigener Verfahrensschritt dargestellt). In Schritt 34 wird eine Folge von Datenworten mit den Detektionszeiten der Photonen erzeugt, wobei die Datenworte in der Reihenfolge des Auftreffens des zugehörigen Photons angeordnet werden. Im nachfolgenden Schritt 35 werden diejenigen Datenworte mit einer Markierung versehen, bei denen vor dem zugehörigen Photon kein anderes Photon im Messintervall erkannt wurde. In Schritt 36 wird dann das nicht korrigierte Gesamthistogramm $M_\alpha(t)$ aus allen Datenworten erzeugt. Das Gesamthistogramm wird in einem ersten Datenspeicher abgelegt. Anschließend wird in Schritt37 das Histogramm $M_1(t)$ aus allen markierten Datenworten erzeugt, deren nachfolgendes Datenworten ebenfalls markiert ist. Dieses Histogramm $M_1(t)$ wird in einem zweiten Datenspeicher abgelegt. In Schritt 38 wird aus den Histogrammen $M_\alpha(t)$ und $M_1(t)$ in den beiden Datenspeichern das korrigierte Gesamthistogramm $f(t)$ berechnet, wobei ein nichtlineares Optimierungsverfahren den schon weiter oben hergeleiteten Ausdruck (8)

$$\sum_{t=t_0+t_d}^{t_m} \left\{ \frac{M_a(t) \cdot M_1(t - t_d)}{P_0} - f(t) \cdot f(t - t_d) \right\}^2$$

minimiert. Dabei wird das korrigierte Gesamthistogramm $f(t)$ in einem weiteren Datenspeicher abgelegt. Die Daten aus dem zuletzt genannten Speicher werden auf einem Monitor präsentiert und bei der Bestimmung von Fluoreszenzlebenszeiten herangezogen.

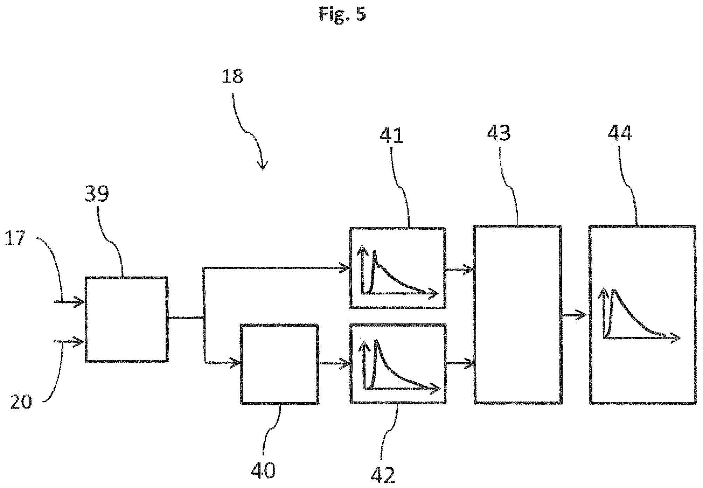

In Figur 5 sind Bestandteile der Verarbeitungseinheit 18 des Mikroskops 1 dargestellt, die das erfindungsgemäße Verfahren verwenden. In einer Zeitmesseinheit 39 wird aus dem Detektorsignal 17 und dem Anregungssignal 20 ein Datenstrom aus Datenworten mit den Detektionszeiten für die erkannten Photonen erzeugt. In einer Markierungseinheit 40 werden diejenigen Datenworte markiert, deren zugehöriges Photon als erstes Photon im Abtastintervall erfasst worden ist. In einer ersten Histogramm-Erzeugungseinheit 41 wird das nicht korrigierte Gesamthistogramm $M_a(t)$ berechnet und in einem ersten Speicher abgelegt. In einer zweiten Histogramm-Erzeugungseinheit 42 wird das Histogramm $M_1(t)$ aus den markierten Datenworten erzeugt, deren nachfolgendes Datenwort ebenfalls markiert ist. Das Histogramm $M_1(t)$ wird durch die Histogramm-Erzeugungseinheit 42 in einem in Figur 5 nicht gezeigten zweiten Speicher abgelegt. In einer Recheneinheit 43 werden die Daten aus den beiden Speichern verknüpft, wodurch das korrigierte Gesamthistogramm $f(t)$ entsteht, welches in einem Ergebnisdatenspeicher 44 abgelegt wird. Die Daten aus dem Ergebnisdatenspeicher 44 werden auf einem in Figur 5 nicht gezeigten Monitor präsentiert und zur Bestimmung von Fluoreszenzlebenszeiten herangezogen.

Die vorgenannten Speicher, in denen die Histogramme $M_\alpha(t)$, $M_1(t)$ und $f(t)$ gespeichert werden, sind beispielsweise als separate Speicherbereiche eines in den Figuren nicht gezeigten Speichers ausgeführt, der Teil der Verarbeitungseinheit 18 ist. Eine solche Ausführungsform ist jedoch rein exemplarisch zu verstehen. Sicherzustellen ist lediglich, dass die vorgenannten Histogramme in an sich beliebiger Weise bereitgehalten werden, um sie wie oben beschrieben zu verarbeiten.

**Patentansprüche**

1. Fluoreszenzlebensdauer-Mikroskopieverfahren mit zeitkorrelierter Einzelphotonenzählung, wobei

eine Probe (13) mittels einer gepulsten Lichtquelle (2) periodisch mit Anregungslichtimpulsen zur Emission von Fluoreszenzphotonen angeregt wird, wobei zwischen jeweils zwei aufeinanderfolgenden Anregungslichtimpulsen ein Messintervall definiert wird,

mittels eines Detektors (16) die Fluoreszenzphotonen erfasst werden und ein die erfassten Fluoreszenzphotonen repräsentierendes Detektorsignal (17) erzeugt wird,

auf Grundlage des Detektorsignals (17) Detektionszeiten bestimmt werden, zu denen die Fluoreszenzphotonen innerhalb der jeweiligen Messintervalle von dem Detektor (16) detektiert werden,

auf Grundlage der Detektionszeiten eine Bildgebung vorgenommen wird,

**dadurch gekennzeichnet, dass** im jeweiligen Messintervall bestimmt wird, ob eine vorbestimmte Anzahl von Fluoreszenzphotonen, die gleich 1 ist, innerhalb des Messintervalls erfasst worden ist,

die Detektionszeiten aller erfassten Fluoreszenzphotonen in einem ersten, für eine Mehrzahl von Bildpixeln gemeinsamen Datenspeicher zusammengefasst werden,

die Detektionszeiten nur derjenigen Fluoreszenzphotonen, die in den jeweiligen Messintervallen in der vorbestimmten Anzahl erfasst worden sind, in einem zweiten, für dieselbe Mehrzahl von Bildpixeln gemeinsamen Datenspeicher zusammengefasst werden,

die in dem ersten Datenspeicher zusammengefassten Detektionszeiten in einem Rechenschritt mit den in dem zweiten Datenspeicher zusammengefassten Detektionszeiten kombiniert werden,

und die Ergebnisse dieses Rechenschritts in einem dritten Datenspeicher abgelegt werden.

2. Fluoreszenzlebensdauer-Mikroskopieverfahren nach Anspruch 1, **dadurch gekennzeichnet, dass** die in dem ersten Datenspeicher zusammengefassten Detektionszeiten in Form eines ersten Histogramms ermittelt werden, das ein nicht korrigiertes Gesamthistogramm darstellt,

die in dem zweiten Datenspeicher zusammengefassten Detektionszeiten in Form eines zweiten Histogramms ermittelt werden, das eine Untermenge des ersten Histogramms darstellt, und die in dem dritten Datenspeicher abgelegten Ergebnisse des genannten Rechenschrittes in Form eines dritten Histogramms ermittelt werden, das ein korrigiertes Gesamthistogramm darstellt.

3. Fluoreszenzfebensdauer-Mikroskopieverfahren nach Anspruch 2, **dadurch gekennzeichnet, dass** das korrigierte Gesamthistogramm ein ideales Histogramm darstellt, das ohne Totzeit aufgenommen würde.

4. Fluoreszenzlebensdauer-Mikroskopieverfahren nach Anspruch 2 oder 3, **dadurch gekennzeichnet, dass** in dem Rechenschritt Spalten des ersten Histogramms mit Spalten des zweiten Histogramms, die anderen Detektionszeiten als die vorgenannten Spalten des ersten Histogramms zugeordnet sind, kombiniert werden.

5. Fluoreszenzlebensdauer-Mikroskopieverfahren nach einem der vorhergehenden Ansprüche, **dadurch gekennzeichnet, dass** das Detektorsignal in Form eines Datenstroms erzeugt wird, in dem für jedes erfasste Fluoreszenzphoton ein Datenwort eingefügt wird.

6. Fluoreszenzlebensdauer-Mikroskopieverfahren nach Anspruch 5, **dadurch gekennzeichnet, dass** in dem Datenwort ein Markierungsbit vorgesehen ist, das angibt, ob das jeweilige Fluoreszenzphoton zu der vorbestimmten Anzahl an Fluoreszenzphotonen gehört, die in dem zugehörigen Messintervall erfasst worden sind.

7. Fluoreszenzlebensdauer-Mikroskopieverfahren nach einem der vorhergehenden Ansprüche, **dadurch gekennzeichnet, dass** in dem Rechenschritt eine nichtlineare Optimierung vorgenommen wird.

8. Fluoreszenzlebensdauer-Mikroskopieverfahren nach Anspruch 7, **dadurch gekennzeichnet, dass** die nichtlineare Optimierung unter Verwendung der Beziehung

$$M_a(t) \cdot M_1(t - t_d) = P_0 \cdot f(t) \cdot f(t - t_d) \quad (5)$$

vorgenommen wird,

wobei t eine Detektionszeit bezeichnet,

$t_d$ eine Totzeit bezeichnet,

$M_a$ ein erstes Histogramm bezeichnet, das ein nicht-korrigiertes Gesamthistogramm darstellt,

$M_1$ ein zweites Histogramm bezeichnet, das eine Untermenge des ersten Histogramms bezeichnet,

f ein drittes Histogramm bezeichnet, das ein korrigiertes Gesamthistogramm darstellt, und

$P_0$ die Wahrscheinlichkeit bezeichnet, dass im gesamten Messintervall kein Fluoreszenzphoton detektiert worden ist.

9.  Fluoreszenzlebensdauer-Mikroskopieverfahren nach einem der Ansprüche 2 bis 6, **dadurch gekennzeichnet, dass** in dem Rechenschritt eine iterative Verfeinerung des dritten Histogramms vorgenommen wird.

10. Fluoreszenzlebensdauer-Mikroskopieverfahren nach Anspruch 9, **dadurch gekennzeichnet, dass** die iterative Verfeinerung unter Verwendung der Beziehung

$$f''(t - t_d) = \frac{M_a(t) \cdot M_1(t - t_d)}{P_0 \cdot f'(t)}$$

erfolgt,

wobei feine Detektionszeit bezeichnet,
$t_d$ eine Totzeit bezeichnet,
$M_a$ ein erstes Histogramm bezeichnet, das das nicht-korrigiertes Gesamthistogramm darstellt,
$M_1$ ein zweites Histogramm bezeichnet, das die Untermenge des ersten Histogramms darstellt,
$f' = M_1(t)$ Startwerte der iterativen Verfeinerung bezeichnet, und
$f''$ das iterativ verfeinerte dritte Histogramm bezeichnet.

11. Fluoreszenzlebensdauer-Mikroskopieverfahren nach einem der vorhergehenden Ansprüche, **dadurch gekennzeichnet, dass** die Ergebnisse des Rechenschritts auf einem Ausgabegerät visualisiert werden.

12. Fluoreszenzlebensdauer-Mikroskopieverfahren nach einem der vorhergehenden Ansprüche, **dadurch gekennzeichnet, dass** die Ergebnisse des Rechenschritts für die Bestimmung von Fluoreszenzlebenszeiten herangezogen werden.

13. Mikroskop (10) zum Durchführen eines Fluoreszenzlebensdauer-Mikroskopieverfahrens mit zeitkorrelierter Einzelphotonenzählung, insbesondere nach einem der vorhergehenden Ansprüche, umfassend

eine Lichtquelle (12), die ausgebildet ist, eine Probe mit Anregungslichtimpulsen zur Emission von Fluoreszenzphotonen anzuregen, wobei zwischen jeweils zwei aufeinanderfolgenden Anregungslichtimpulsen ein Messintervall definiert ist,
einen Detektor (16), der ausgebildet ist, die Fluoreszenzphotonen zu erfassen und ein die erfassten Fluoreszenzphotonen repräsentierendes Detektorsignal (17) zu erzeugen, und
eine Verarbeitungseinheit (18), die ausgebildet ist, auf Grundlage des Detektorsignals (17) Detektionszeiten zu bestimmen, zu denen die Fluoreszenzphotonen innerhalb der jeweiligen Messintervalle von dem Detektor (16) detektiert werden, und anhand der Detektionszeiten eine Bildgebung vorzunehmen,
**dadurch gekennzeichnet, dass** die Verarbeitungseinheit (16) ausgebildet ist, im jeweiligen Messintervall zu bestimmen, ob eine vorbestimmte Anzahl von Fluoreszenzphotonen, die gleich 1 ist, innerhalb des Messintervalls erfasst worden ist,
die Detektionszeiten aller erfassten Fluoreszenzphotonen in einem ersten, für eine Mehrzahl von Bildpixeln gemeinsamen Datenspeicher zusammenzufassen,
die Detektionszeiten nur derjenigen Fluoreszenzphotonen, die in den jeweiligen Messintervallen in der vorbestimmten Anzahl erfasst worden sind, in einem zweiten, für dieselbe Mehrzahl von Bildpixeln gemeinsamen Datenspeicher zusammenzufassen,
die in dem ersten Datenspeicher zusammengefassten Detektionszeiten in einem Rechenschritt mit den in dem zweiten Datenspeicher zusammengefassten Detektionszeiten zu kombinieren,
und die Ergebnisse des Rechenschritts in einem dritten Datenspeicher abzulegen.

14. Mikroskop (10) nach Anspruch 13, **dadurch gekennzeichnet, dass** es ein konfokales Scanmikroskop oder ein Multiphotonenmikroskop ist

**Claims**

1. A fluorescence-lifetime imaging microscopy method with time-correlated single-photon counting, wherein

   a sample (13) is excited with the aid of a pulsed light source (2) periodically with excitation light pulses to emit fluorescence photons, a measurement interval being defined between two successive excitation light pulses in each case,

   the fluorescence photons are captured by means of a detector (16) and a detector signal (17) representing the captured fluorescence photons is generated,

   detection times at which the fluorescence photons are detected by the detector (16) within the respective measurement intervals are determined on the basis of the detector signal (17),

   imaging is performed on the basis of the detection times, **characterized in that** in the respective measurement interval it is determined whether a predetermined number of fluorescence photons, which equals 1, has been captured within the measurement interval,

   the detection times of all captured fluorescence photons are compiled in a first data memory, common to a plurality of image pixels,

   the detection times of only those fluorescence photons which were captured in the predetermined number within the respective measurement intervals are compiled in a second data memory, common to the same plurality of image pixels,

   the detection times compiled in the first data memory are combined with the detection times compiled in the second data memory in a calculation step,

   and the results of this calculation step are stored in a third data memory.

2. The fluorescence-lifetime imaging microscopy method according to claim 1, **characterized in that** the detection times compiled in the first data memory are determined in the form of a first histogram that represents a noncorrected overall histogram,

   the detection times compiled in the second data memory are determined in the form of a second histogram that represents a subset of the first histogram, and

   the results of said calculation step stored in the third data memory are determined in the form of a third histogram that represents a corrected overall histogram.

3. The fluorescence-lifetime imaging microscopy method according to claim 2, **characterized in that** the corrected overall histogram represents an ideal histogram that would have been recorded without dead time.

4. The fluorescence-lifetime imaging microscopy method according to claim 2 or 3, **characterized in that** columns of the first histogram are combined with columns of the second histogram, which are assigned to different detection times than the afore-mentioned columns of the first histogram, in the calculation step.

5. The fluorescence-lifetime imaging microscopy method according to one of the preceding claims, **characterized in that** the detector signal is generated in the form of a data stream, in which a data word is inserted for each captured fluorescence photon.

6. The fluorescence-lifetime imaging microscopy method according to claim 5, **characterized in that** a flag bit is provided in the data word, said flag bit specifying whether the respective fluorescence photon is part of the predetermined number of fluorescence photons that has been captured in the associated measurement interval.

7. The fluorescence-lifetime imaging microscopy method according to one of the preceding claims, **characterized in that** a non-linear optimization is performed in the calculation step.

8. The fluorescence-lifetime imaging microscopy method according to claim 7, **characterized in that** the non-linear optimization is performed using the relationship

$$M_a(t) \cdot M_1(t - t_d) = P_0 \cdot f(t) \cdot f(t - t_d) \quad (5)$$

wherein t designates a detection time,
$t_d$ designates a dead time,

$M_a$ designates a first histogram that represents a noncorrected overall histogram,
$M_1$ designates a second histogram that designates a subset of the first histogram,
$f$ designates a third histogram that represents a corrected overall histogram, and
$P_0$ designates the probability that no fluorescence photon has been detected within the entire measurement interval.

9. The fluorescence-lifetime imaging microscopy method according to one of the claims 2 to 6, **characterized in that** an iterative refinement of the third histogram is undertaken in the calculation step.

10. The fluorescence-lifetime imaging microscopy method according to claim 9, **characterized in that** the iterative refinement is implemented using the relationship

$$f''(t - t_d) = \frac{M_a(t) \cdot M_1(t - t_d)}{P_0 \cdot f'(t)}$$

wherein t designates a detection time,
$t_d$ designates a dead time,
$M_a$ designates a first histogram that represents a noncorrected overall histogram,
$M_1$ designates a second histogram that designates a subset of the first histogram,
$f'=M_1(t)$ designates initial values of the iterative refinement, and
$f''$ designates the iteratively refined third histogram.

11. The fluorescence-lifetime imaging microscopy method according to one of the preceding claims, **characterized in that** the results of the calculation step are visualized on an output device.

12. The fluorescence-lifetime imaging microscopy method according to one of the preceding claims, **characterized in that** the results of the calculation step are used to determine fluorescence lifetimes.

13. The microscope (10) for carrying out a fluorescence-lifetime imaging microscopy method with time-correlated single-photon counting, in particular as claimed in any one of the preceding claims, comprising

a light source (12) that is configured to excite a sample with excitation light pulses to emit fluorescence photons, a measurement interval being defined between two successive excitation light pulses in each case,
a detector (16) that is configured to capture the fluorescence photons and to generate a detector signal (17) representing the captured fluorescence photons, and a processing unit (18) that is configured to determine detection times at which the fluorescence photons are detected by the detector (16) within the respective measurement intervals on the basis of the detector signal (17) and to perform imaging on the basis of the detection times,
**characterized in that** the processing unit (16) is configured to determine within the respective measurement interval whether a predetermined number of fluorescence photons, that equals 1, has been captured within the measurement interval,
to compile the detection times of all captured fluorescence photons in a first data memory, common to a plurality of image pixels,
to compile the detection times of only those fluorescence photons which were captured in the predetermined number within the respective measurement intervals in a second data memory, common to the same plurality of image pixels, to combine the detection times compiled in the first data memory with the detection times compiled in the second data memory in a calculation step,
and to store the results of the calculation step in a third data memory.

14. The microscope (10) as claimed in claim 13, **characterized in that** it is a confocal scanning microscope or a multiphoton microscope.

**Revendications**

1. Procédé de microscopie en temps de vie de fluorescence avec comptage d'électrons corrélé dans le temps,

un échantillon (13) étant excité périodiquement avec des impulsions de lumière d'excitation au moyen d'une source de lumière pulsée (2) en vue de l'émission de photons de fluorescence, un intervalle de mesure étant défini respectivement entre deux impulsions de lumière d'excitation successives,

les photons de fluorescence étant détectés au moyen d'un détecteur (16) et un signal de détecteur (17) qui représente les photons de fluorescence détectés étant généré,

des moments de détection, auxquels les photons de fluorescence sont détectés par le détecteur (16) à l'intérieur de l'intervalle de mesure respectif, étant déterminés sur la base du signal de détecteur (17),

une imagerie étant effectuée sur la base des moments de détection,

**caractérisé en ce qu'**il est déterminé, dans l'intervalle de mesure respectif, si un nombre prédéterminé de photons de fluorescence, lequel est égal à 1, a été détecté à l'intérieur de l'intervalle de mesure,

les moments de détection de tous les photons de fluorescence détectés sont regroupés dans une mémoire de données commune pour une pluralité de pixels d'image,

les moments de détection des seuls photons de fluorescence qui ont été détectés dans les intervalles de mesure respectifs dans le nombre prédéterminé sont regroupés dans une deuxième mémoire de données commune pour la même pluralité de pixels d'image,

les moments de détection regroupés dans la première mémoire de données sont combinés dans une étape de calcul avec les moments de détection regroupés dans la deuxième mémoire de données,

et les résultats de cette étape de calcul sont stockés dans un troisième mémoire de données.

2. Procédé de microscopie en temps de vie de fluorescence selon la revendication 1, **caractérisé en ce que** les moments de détection regroupés dans la première mémoire de données sont identifiés sous la forme d'un premier histogramme qui représente un histogramme global non corrigé,

les moments de détection regroupés dans la deuxième mémoire de données sont identifiés sous la forme d'un deuxième histogramme qui représente un sous-ensemble du premier histogramme,

les résultats de ladite étape de calcul, stockés dans la troisième mémoire de données sont identifiés sous la forme d'un troisième histogramme qui représente un histogramme global corrigé.

3. Procédé de microscopie en temps de vie de fluorescence selon la revendication 2, **caractérisé en ce que** l'histogramme global corrigé représente un histogramme idéal qui a été enregistré sans temps mort.

4. Procédé de microscopie en temps de vie de fluorescence selon la revendication 2 ou 3, **caractérisé en ce que** dans l'étape de calcul, des colonnes du premier histogramme sont combinées avec des colonnes du deuxième histogramme qui sont affectées à des moments de détection différents desdites colonnes du premier histogramme.

5. Procédé de microscopie en temps de vie de fluorescence selon l'une des revendications précédentes, **caractérisé en ce que** le signal de détecteur est généré sous la forme d'un flux de données dans lequel un mot de données est inséré pour chaque photon de fluorescence détecté.

6. Procédé de microscopie en temps de vie de fluorescence selon la revendication 5, **caractérisé en ce qu'**un bit de marquage est prévu dans le mot de données, lequel indique si le photon de fluorescence respectif fait partie du nombre prédéterminé de photons de fluorescence qui ont été détectés dans l'intervalle de mesure associé.

7. Procédé de microscopie en temps de vie de fluorescence selon l'une des revendications précédentes, **caractérisé en ce qu'**une optimisation non linéaire est effectuée dans l'étape de calcul.

8. Procédé de microscopie en temps de vie de fluorescence selon la revendication 7, **caractérisé en ce que** l'optimisation non linéaire est effectuée en utilisant la relation

$$M_a(t) \bullet M_1(t-t_d) = P_0 \bullet f(t) \bullet f(t-t_d) \quad (5),$$

$t$ désignant un moment de détection,

$t_d$ désignant un temps mort,

$M_a$ désignant un premier histogramme, qui représente un histogramme global non corrigé,

$M_1$ désignant un deuxième histogramme, qui représente un sous-ensemble du premier histogramme,

$f$ désignant un troisième histogramme, qui représente un histogramme global corrigé,

$P_0$ désignant la probabilité selon laquelle aucun photon de fluorescence n'a été détecté dans l'intervalle de mesure total.

**9.** Procédé de microscopie en temps de vie de fluorescence selon l'une des revendications 2 à 6, **caractérisé en ce qu'**un affinement itératif du troisième histogramme est effectué dans l'étape de calcul.

**10.** Procédé de microscopie en temps de vie de fluorescence selon la revendication 9, **caractérisé en ce que** l'affinement itératif est effectué en utilisant la relation

$$f''(t - t_d) = \frac{M_a(t) \cdot M_1(t - t_d)}{P_0 \cdot f'(t)},$$

t désignant un moment de détection,
$t_d$ désignant un temps mort,
$M_a$ désignant un premier histogramme, qui représente l'histogramme global non corrigé,
$M_1$ désignant un deuxième histogramme, qui représente le sous-ensemble du premier histogramme,
f' = $M_1$ (t) désignant les valeurs de départ de l'affinement itératif et
f" désignant le troisième histogramme affiné de manière itérative.

**11.** Procédé de microscopie en temps de vie de fluorescence selon l'une des revendications précédentes, **caractérisé en ce que** les résultats de l'étape de calcul sont visualisés sur un périphérique de sortie.

**12.** Procédé de microscopie en temps de vie de fluorescence selon l'une des revendications précédentes, **caractérisé en ce que** les résultats de l'étape de calcul sont utilisés pour la détermination de temps de vie de fluorescence.

**13.** Microscope (10) destiné à mettre en œuvre un procédé de microscopie en temps de vie de fluorescence avec comptage d'électrons corrélé dans le temps, notamment selon l'une des revendications précédentes, comprenant une source de lumière (12), qui est configurée pour exciter un échantillon avec des impulsions de lumière d'excitation en vue de l'émission de photons de fluorescence, un intervalle de mesure étant défini respectivement entre deux impulsions de lumière d'excitation successives,

un détecteur (16), qui est configuré pour détecter les photons de fluorescence et générer un signal de détecteur (17) qui représente les photons de fluorescence détectés, une unité de traitement (18), qui est configurée pour déterminer, sur la base du signal de détecteur (17), des moments de détection auxquels les photons de fluorescence sont détectés par le détecteur (16) à l'intérieur de l'intervalle de mesure respectif, et effectuer une imagerie à l'aide des moments de détection,
**caractérisé en ce que** l'unité de traitement (16) est configurée pour déterminer, dans l'intervalle de mesure respectif, si un nombre prédéterminé de photons de fluorescence, lequel est égal à 1, a été détecté à l'intérieur de l'intervalle de mesure,
regrouper les moments de détection de tous les photons de fluorescence détectés dans une mémoire de données commune pour une pluralité de pixels d'image,
regrouper les moments de détection des seuls photons de fluorescence qui ont été détectés dans les intervalles de mesure respectifs dans le nombre prédéterminé dans une deuxième mémoire de données commune pour la même pluralité de pixels d'image,
combiner, dans une étape de calcul, les moments de détection regroupés dans la première mémoire de données avec les moments de détection regroupés dans la deuxième mémoire de données,
et stocker les résultats de cette étape de calcul dans un troisième mémoire de données.

**14.** Microscope (10) selon la revendication 13, **caractérisé en ce qu'**il s'agit d'un microscope à balayage confocal ou d'un microscope multiphotonique.

Fig. 1

**Fig. 2**

EP 3 752 818 B1

Fig. 3

Fig. 4

Erzeugung einer Folge von Datenworten mit den Detektionszeiten der Photonen

Markierung des Datenworts des jeweils ersten Photons im Abtastintervall

Erzeugung eines ersten Histogramms $M_a(t)$ aus den Werten aller Datenworte

Erzeugung eines zweiten Histogramms $M_1(t)$ aus den Werten der markierten Datenworten, wo das nachfolgende Datenworten ebenfalls markiert ist

Berechnung eines Histogramms f(t) mittels Minimierung von

$$\sum_{t=t_0+t_d}^{t_m} \left\{ \frac{M_a(t) \cdot M_1(t-t_d)}{P_0} - f(t) \cdot f(t-t_d) \right\}^2$$

Fig. 5

**EP 3 752 818 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017201980 A
- WO 2010089363 A1
- WO 2017202980 A1

**In der Beschreibung aufgeführte Nicht-Patentliteratur**

- **P. B. COATES.** Pile-up corrections in the measurement of lifetimes. *J. Phys. E: Sci. Instrum.,* 1972, vol. 5, 148-150
- **J. G. WALKER.** Iterative correction for 'pile-up' in single-photon lifetime measurement. *Opt. Comm.,* 2002, vol. 201, 271-277
- **M. PATTING.** Dead-time effects in TCSPC data analysis. *Proc. of SPIE,* 2007, vol. 6583, 658307
- **M. PATTING.** Fluorescence decay data analysis correcting for detector pulse pileup at very high count rates. *Optical Engineering,* 2018, vol. 57 (3), 031305
- **J. D. DRISCOLL.** Photon counting, censor corrections, and lifetime imaging for improved detection in two-photon microscopy. *J Neurophysiol,* 2011, vol. 105, 3106-3113
- Fluorescence Lifetime Imaging Microscopy. **VON CHING-WIE CHANG et al.** Recent Advances in Cytometry, Part A - Instrumentation, Methods. Elsevier, 01. Januar 2007, vol. 81, 495-524